Europäisches Patentamt

(19) European Patent Office

Office européen des brevets

(11) Publication number: **0 451 964 A2**

(12) # EUROPEAN PATENT APPLICATION

(21) Application number: **91302214.1**

(51) Int. Cl.⁵: **C04B 14/12, C04B 20/06**

(22) Date of filing: **15.03.91**

(30) Priority: **15.03.90 ZA 901977**

(43) Date of publication of application:
**16.10.91 Bulletin 91/42**

(84) Designated Contracting States:
**AT BE CH DE DK ES FR GB GR IT LI LU NL SE**

(71) Applicant: **LITEROCK INTERNATIONAL (PROPRIETARY) Ltd.**
**1305 Mutual House, Beach Road, Humewood Port Elizabeth, Cape Province (ZA)**

(72) Inventor: **Derby-Lewis, Gerald Alan**
**Idlers End, Anchorage Way**
**Wilderness, Cape Province (ZA)**

(74) Representative: **Frankland, Nigel Howard et al**
**FORRESTER & BOEHMERT**
**Widenmayerstrasse 4/I**
**W-8000 München 22 (DE)**

(54) **Method of producing a light weight building material.**

(57) A method of producing a lightweight building material, such as an aggregate, comprises mixing clay powder with a high percentage of coal dust to create areas of coal within the mixture which represent a desired density of voids, pelletising the mixture in the case of aggregate, and firing it to burn off the coal and harden the clay. The burning off of the coal leaves lightweight void areas within the hardened clay to form a lightweight building material or aggregate.

EP 0 451 964 A2

## LITEROCK

### INTRODUCTION

**THIS INVENTION** relates to a method of producing a lightweight building material, and particularly but not exclusively for a method of producing a lightweight aggregate for use in building material, and to such an aggregate.

### BACKGROUND TO THE INVENTION

There are many known processes for the production of clay based lightweight aggregates for concrete. Usually this involves the pelletising and heat treatment of bloating clays.

The heat expansion or bloating of the clays is either a natural characteristic of the clay or is induced by the addition of various bloating chemicals. Deposits of these special clays are rare compared to the more common clays used in brickmaking, and the bloating chemicals are expensive. The process for production of bloating clay pellets is relatively expensive and requires considerable capital outlay.

The use of coal dust in clay mixtures for building materials is well known. Some 4% - 6% by weight of the clay used for clay bricks is often coal dust, and this is used in order to assist in firing the clay product since the coal burns off producing an evenly dispersed internal heat in the clay. Otherwise, carbonacious material inherently present in clay is a disadvantage, and has to be burnt off. The specification of United Kingdom Patent No. 149347 discloses a method of pelletising which involves burning off this unwanted carbonacious material.

The addition of carbon to clay in order to preheat the clay when it is burnt, is also disclosed in United Kingdom specification 1356443, which deals with the production of lightweight building aggregates using clay. The clay is pelletised and fired, but the coal has no function in producing the lightweight nature of the final aggregate.

The aggregate is formed by bringing the raw material into a liquid state in the presence of a controlled atmosphere to limit eliberation of gasses, and the liquid is then divided into droplets and the droplets are expanded by inducing them into an atmosphere of a different composition causing the expansion.

### OBJECT OF THE INVENTION

It is an object of this invention to provide a simple and effective method of producing a lightweight building material, and particularly but not exclusively, a lightweight aggregate.

### SUMMARY OF THE INVENTION

In accordance with this invention there is provided a method of producing a lightweight building material comprising mixing clay powder with sufficient coal dust to create areas of coal within the mixture which represent a designed density of voids, forming the mixture, and firing it to substantially burn off the coal dust and harden the clay, and form lightweight void areas of residue of the burnt off coal, dispersed within the residual clay of the formed mixture.

Preferably the mixture is pelletised prior to firing, and, the pellets are fired at a temperature sufficient to cause vitrification or melting of the outer surface of the pellets to close surface voids and reduce porosity of the pellets.

The clay may contain 60% Silicon oxide, 20% Aluminium oxide and 10% Iron oxide, and the percentage by weight of coal dust in the total mixture may be between 40% and 70%. At least sixty percent of the coal dust should have a particle size of between 1000 and 1200 microns.

There is also provided for the pellets to be used as feedstock in a gas reduction process, and to be heated in a reducing atmosphere to release volatile constituents from the coal.

Further heating of the pellets takes place with steam at an elevated temperature, to cause conversion of the remaining carbon in the pellets to carbon monoxide and hydrogen.

Reacting the further residual carbon in the pellets with controlled amounts of oxygen, provides sufficient heat to achieve sintering temperatures of the residual clay pellets.

The invention extends to a building materials made in accordance with the method as set out above.

### BRIEF DESCRIPTION OF THE DRAWING

Embodiments of the invention are described below, and with reference to the accompanying drawing, which is a process chart illustrating one method of of producing a lightweight aggregate.

### DETAILED DESCRIPTION OF THE DRAWING

A first example is given of one method of performing the invention:

### Example 1

A conventional brick clay, having approximately 60 % $SiO_2$, 20% $AlO_2$ and 10% $FeO_2$, is mixed with a fine coal dust from a colliery, having 60% of its particle size between 150 and 1000 microns. 70% of the mixture by weight is coal. The mixture is wetted and pelletised, and allowed to sun dry.

The pellets are then fired in the kiln, during which time they ignite and burnt as a fuel.

Clay pellets which resulted from this method were hard and lightweight, with the coal dust having being substantially burnt off. An examination of the pellets showed that the coal dust forms small areas or pockets of coal within the mixture, which burns off leaving voids of a lightweight nature, being filled with either exhausted coal gasses, or air, or ash from the burnt coal, or a combination of all or some of these.

The pellets were further fired to cause vitrification of the surface which allowed the surface to melt and seal over thus reducing the pellet porosity. When mixed in a cementitious mix and moulded and allowed to cure by a passage of time, a lightweight brick was formed which exhibited good strength properties. The density of the final pelletised mixture was approximately 420kg/m³. The pellets however, owing to their high coal content, can also be combusted as a material in a process for recovering products from the gasification of the coal.

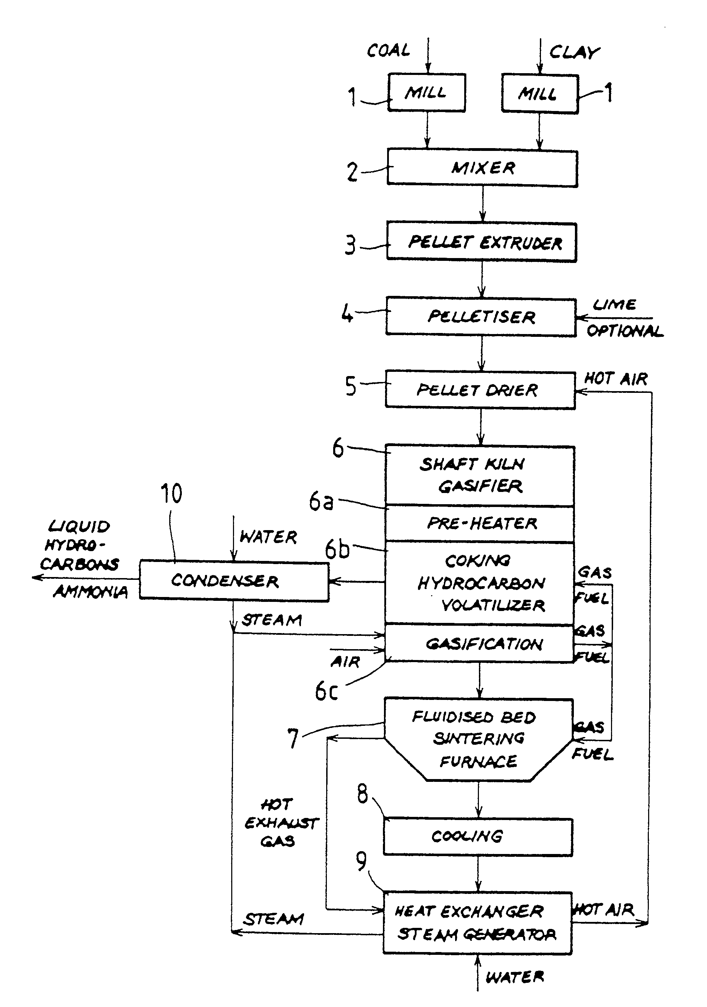

The use of the pellets in this way allows the pellets to be burnt as a by-product of a further process, and an embodiment of this is further described with reference to Figure 1.

As illustrated, the first step in the production process is to grind both the coal and clay into appropriately fine particle sizes in a mill (1). The particle size of the coal determines the ultimate size of the voids in the pellets. Typically 70% of the coal particle sizes are 1000 microns.

The finely divided coal and clay are then blended in a mixer (2).

Prior to passing the mixture of coal and clay through an extruder (3) a small quantity of water is added to damp the mixture. The extruded pellets are cylindrical in shape with the diameter equal to the length of the cylinder. The pellets are pre-sized in this way to enhance the rate of pelletising in the pelletiser (4).

The clay acts as a binder for the coal in pelletisation. In the pelletiser (4) the cylindrical extrudates are rolled into spherical pellets. Various sizes of pellets are produced ranging from 6 millimetres to 30 millimetres in diameter.

Optionally lime power is added to the mixture when atmospheric pollution is a consideration. The formation of corrosive sulphur containing gasses is inhibited due to chemical reactions with the lime when, at a later stage of the process, high temperatures are applied to the pellets in a reducing atmosphere. The lime also reduces any adhesion between the individual pellets.

The coal/clay pellets are hot air (100 degrees centigrade) dried in the pellet drier (5). This hardens the pellets due to the bonding action of the clay. The excess water is removed from the pellets. This prevents steam generation within the pellets, at the higher temperatures applied in subsequent processing, which could cause break up of the pellets.

The pellets are then passed through a series of shaft or rotary kilns and a fluidised bed furnace.

In the first of these (6a, 6b) the pellets are subjected to pre-heating and the temperature is raised to about 600 degrees centigrade whereupon coking of the coal in the pellets takes place. Hydrocarbon volatilization occurs and the gaseous hydrocarbons are passed through a condenser (10), recovered and used as fuel or chemical reactants in accordance with conventional practice. The heat energy necessary is introduced by means of hot gasses (about 1100 degrees centigrade) mainly hydrogen and carbon monoxide produced by carbon gasification in the next kiln (6 c).

In the second kiln (6 c) the coked pellets undergo gasification. Steam and air are introduced which reacts with part of the carbon content of the pellets to produce a mixture of hydrogen and carbon monoxide in accordance with the water gas reaction which is a well known process for producing gaseous fuel from carbon. This endothermic reaction requires additional heat energy which is produced within the kiln by reacting the remaining carbon content of the pellets with a limited amount of oxygen, which in controlled to raise the temperature of the pellets to about 1100 degrees centigrade, whilst ensuring that the vitrification or melting temperature of the clay is not exceeded.

At this critical stage of the process the carbon particles in the pellets are entirely burnt away leaving ash/air filled voids evenly dispersed throughout the residual clay pellets. These voids in the clay are responsible for the reduced mass density and the suitability of the porous clay pellets for use as lightweight aggregates. The high temperatures attained lead to sintering of the clay in the pellet and the clay becomes very hard.

The porous pellets can now be cooled and used as lightweight aggregate.

Under certain applications the porosity of the pellets can be a disadvantage and it may be desirable to seal the outer surfaces of the pellets. It may also be desirable to harden the pellets still further by increasing the sintering temperature whilst controlling the vitrification or melting of the clay.

The porous pellets are passed into a fluidised bed furnace (7) or rotary kiln where carefully controlled temperature is raised above the vitrification temperature of the clay but the pellets remain at that temperature only long enough for the surface of the pellets to vitrify. The surface clay of the pellets melts sealing the voids on the surface of the pellets. The pellets are then non porous due to the thin vitrified shells encapsulating the pellets.

To inhibit adhesion of the pellets as the surfaces vitrify, fine lime powder may be introduced which thinly coats the surface of the pellets.

The heat energy required in the fluidised bed furnace (7) or rotary kiln is obtained from the hot gas fuel, mainly hydrogen and carbon monoxide, produced in the shaft kiln gasifier (6 c).

The pellets are cooled in a shaft kiln (8) and the neat given off is captured by a heat exchanger (9) for production of hot air for the pellet drier (5) and for steam generation (9) required for the gasifier. The hot exhaust has of the fluidised bed furnace (7) or rotary kiln is also passed through the heat exchanger. Not only is the overall process described, autothermal, but there is sufficient surplus energy for the export of steam or hot gas to be used for other external purposes.

This efficient use of the products of combustion of the coal reduces the production cost of the lightweight clay aggregate which is, in effect, a by product of the coal combustion. Instead of largely useless ash with the attendant ash disposal problem a sought after, low cost lightweight aggregate is produced.

## Claims

1. A method of producing a lightweight building material comprising mixing clay powder with sufficient coal dust to create areas of coal within the mixture which represent a desired density of voids, forming the mixture, and firing it to substantially burn off the coal dust and harden the clay, and form lightweight void areas of residue of the burnt off coal dispersed within the residual clay of the formed mixture.

2. A method as claimed in claim 1 in which the mixture is pelletised prior to firing.

3. A method as claimed in claim 2 in which the pellets are fired at a temperature sufficient to cause vitrification or melting of the outer surface of the pellets to close surface voids and reduce porosity of the pellets.

4. A method as claimed in claim 1 in which the clay contained 60% Silicon oxide, 20% Aluminium oxide and 10% Iron oxide.

5. A method as claimed in claim 1 in which at least the percentage by weight of coal dust in the total mixture is between 40% and 70%.

6. A method as claimed in claim 2 in which 60% of the coal dust has a particle size of between 150 and 1000 microns.

7. A method as claimed in claim 3 in which the pellets are used as feedstock in a gas reduction process, and are heated in a reducing atmosphere to release volatile constituents from the coal.

8. A method as claimed in claim 7 further heating the pellets with steam at an elevated temperature to cause conversion of the remaining carbon in the pellets to carbon monoxide and hydrogen.

9. A method as claimed in claim 8 including reacting the further residual carbon in the pellets with controlled amounts of oxygen to derive sufficient heat to achieve sintering temperatures of the residual clay pellets.

10. A building material made in accordance with the method as claimed in any one of the preceding claims.